(19) Europäisches Patentamt
European Patent Office
Office européen des brevets

(11) **EP 2 238 334 B1**

(12) **FASCICULE DE BREVET EUROPEEN**

(45) Date de publication et mention de la délivrance du brevet:
**14.08.2019 Bulletin 2019/33**

(21) Numéro de dépôt: **09710876.5**

(22) Date de dépôt: **02.02.2009**

(51) Int Cl.:
*F02D 41/02* (2006.01)   *F01N 11/00* (2006.01)
*F01N 3/023* (2006.01)   *F01N 3/035* (2006.01)
*F02D 41/14* (2006.01)   *F02D 41/30* (2006.01)

(86) Numéro de dépôt international:
**PCT/FR2009/050156**

(87) Numéro de publication internationale:
**WO 2009/101316 (20.08.2009 Gazette 2009/34)**

(54) **PROCEDE ET DISPOSITIF POUR LA REGENERATION D'UN DISPOSITIF DE POST-TRAITEMENT DE GAZ D'ECHAPPEMENT**

VERFAHREN UND VORRICHTUNG ZUR WIEDERHERSTELLUNG EINER ABGASNACHBEARBEITUNGSVORRICHTUNG

METHOD AND DEVICE FOR REGENERATING AN EXHAUST GAS POST-TREATMENT DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **07.02.2008 FR 0800657**

(43) Date de publication de la demande:
**13.10.2010 Bulletin 2010/41**

(73) Titulaire: **Renault s.a.s.**
**92100 Boulogne-Billancourt (FR)**

(72) Inventeurs:
• **BARRILLON, Pascal**
  **F-92100 Boulogne Billancourt (FR)**
• **POILANE, Emmanuel**
  **F-91290 Arpajon (FR)**
• **LE-MORVAN, Pierre-yves**
  **F-92370 Chaville (FR)**

(56) Documents cités:
EP-A- 1 519 021         WO-A-2008/083917
DE-A1-102004 019 660    FR-A- 2 833 039

## Description

L'invention concerne un procédé de pilotage d'un dispositif de post-traitement des émissions polluantes d'un moteur d'un véhicule automobile. Elle concerne aussi un dispositif de motorisation mettant en oeuvre ce procédé ainsi qu'un véhicule automobile en tant que tel équipé d'un tel dispositif.

Malgré l'optimisation du fonctionnement des moteurs à combustion interne, et plus particulièrement des moteurs de type diesel, ces moteurs génèrent un premier type d'émission polluante consistant en l'émission de particules qui sont constituées de suies produites lors de la combustion imparfaite dans le moteur.

Selon l'état de la technique, il est connu de piéger ces particules présentes dans les gaz d'échappement par l'implantation d'un filtre à particules dans la ligne d'échappement en aval des chambres de combustion du moteur. Un tel filtre est conçu de façon à pouvoir retenir les particules se trouvant dans les gaz d'échappement qui traversent le filtre. Au fur et à mesure de l'utilisation du moteur, les particules s'accumulent dans le filtre et finissent par entraîner une contre-pression importante à l'échappement du moteur, ainsi qu'une augmentation de la pression différentielle aux bornes du filtre à particules, ce qui diminue considérablement les performances du moteur.

Afin de rétablir les performances du moteur, on pratique une régénération du filtre à particules par combustion des particules qui s'y sont accumulées. Cette opération de combustion est rendue possible par une élévation de la température interne du filtre à particules par augmentation de la thermique des gaz d'échappement. Pour ce faire, on procède généralement à un mode de combustion spécifique afin de garantir les niveaux de thermique et/ou de richesse en carburant nécessaires, basé par exemple sur une injection retardée de carburant dans les chambres de combustion du moteur. On peut en particulier injecter du carburant juste après le point mort haut lors de la phase de détente, ce qui a pour effet d'augmenter la température des gaz à l'échappement. Ainsi, le débit d'injection de carburant dans les chambres de combustion des cylindres peut être réglé selon les besoins, de façon à fonctionner selon un mode de combustion plus ou moins riche et obtenir une variation de la température des gaz d'échappement ainsi que de la proportion d'oxydants et de réducteurs dans ces gaz.

Ainsi, classiquement, les filtres à particules fonctionnent donc de manière périodique, en deux phases. Lors d'une première phase, le filtre stocke des particules émises par le moteur, et lors d'une deuxième phase dite de régénération, les particules stockées dans le filtre sont brûlées afin de régénérer le filtre. Dans l'état de la technique, la régénération du filtre à particules se fait périodiquement dès que la masse de particules dans le filtre devient trop importante. Cette régénération est déclenchée automatiquement, alors que le moteur fonctionne, sans que le conducteur du véhicule en ait conscience.

D'autre part, les moteurs génèrent aussi un second type d'émission polluante consistant en l'émission d'oxydes d'azote (NOx). Pour réduire ces émissions d'oxydes d'azote dans un mélange globalement oxydant tel que les gaz d'échappement d'un moteur, on dispose habituellement dans la ligne d'échappement un catalyseur comportant un moyen d'accumulation des oxydes d'azote dénommé "$NO_x$-Trap" dans lequel sont piégés les oxydes d'azote émis pendant le fonctionnement normal du moteur. Le fonctionnement d'un tel catalyseur d'accumulation d'oxydes d'azote est par exemple décrit dans les documents EP 1 519 021 A2 et EP0580389. Un tel système anti-pollution est souvent couplé avec une solution connue sous la dénomination anglo-saxonne d'EGR (Exhaust Gaz Recirculation) haute pression, consistant en une recirculation de tout ou partie des gaz d'échappement en sortie du moteur vers l'admission moteur ou de désorber le soufre qui empoisonne le NOxTrap.

Un tel catalyseur « $NO_x$-Trap » est aussi régénéré périodiquement en exploitant le moteur en régime riche pendant un certain temps afin de décomposer les nitrates en libérant du $NO_x$ qui est alors réduit en azote par les réducteurs tels que $H_2$, HC, et CO contenus dans les gaz d'échappement.

Pour optimiser le traitement de l'ensemble des polluants rappelés ci-dessus, il est important de gérer au mieux les phases de stockage et de régénération des dispositifs de post-traitement anti-pollution disposés sur la ligne d'échappement en maîtrisant, autant que possible, la puissance thermique développée au sein de ces dispositifs « pièges » afin d'optimiser la combustion des suies dans le cas du filtre à particules et la désorption du soufre dans le cas du piège à $NO_x$ ou $NO_x$-Trap. En effet, ces réactions de combustion, d'oxydation, d'adsorption ou de réduction sont directement dépendantes de la température du support de ces dispositifs de post-traitement et des gaz qui les traversent. Il faut de plus aussi éviter d'éventuels pics de température risquant de détériorer les dispositifs de post-traitement, en contrôlant la puissance thermique en sortie du premier système de post-traitement qui est généralement du type catalyseur d'oxydation ou $NO_x$-Trap, de façon à rester dans une fenêtre de température proche de la température maximale d'utilisation.

Lors d'une phase de régénération d'un second catalyseur de post-traitement, placé éventuellement en aval d'un premier catalyseur, un des problèmes que l'on cherche à résoudre est le contrôle de la thermique au sein et/ou en sortie du premier monolithe de post-traitement dans une fenêtre de température proche de sa température maximale d'utilisation. A titre d'exemple, ce premier catalyseur peut être un catalyseur 3-voies ou un piège à NOx, voire un système 4-voies, tandis que le second peut-être un catalyseur 4-voies ou un filtre à particules.

De façon connue, un tel contrôle de température peut être réalisé à partir d'une mesure de la température interne du dispositif de post-traitement ou catalyseur, au moyen de capteurs placés à l'intérieur de celui-ci. Cependant, l'implantation d'un capteur au sein d'un tel dispositif est difficile et présente des risques pour l'intégrité du monolithe constituant le catalyseur. De plus, l'utilisation d'un capteur de température en aval de ce premier dispositif pour le contrôle de la thermique peut être problématique lorsque l'inertie de ce dispositif est trop grande devant l'amplitude et la fréquence de variation des perturbations qu'il subit, notamment en débit de gaz. De ce fait, les caractéristiques temporelles de la réponse d'un tel procédé à l'échelon de commande limitent les performances d'un contrôle par retour d'état en terme de suivi de température de consigne et il s'avère impossible d'éviter des dépassements de la température maximale admissible. De plus, en raison de la sensibilité du procédé aux changements des conditions de fonctionnement, il est très difficile de réaliser un contrôle assez stable sur l'ensemble du champ de fonctionnement du moteur.

Finalement, le maintien des dispositifs de post-traitement nécessitant une phase de régénération dans une plage de températures assurant l'efficacité maximale de ces phase de régénération, tout en prévenant d'éventuels dépassements de température qui endommageraient prématurément ces dispositifs, représente un problème technique délicat traité de manière insatisfaisante par les solutions existantes.

Pour éviter ces inconvénients, l'invention a pour objet un nouveau procédé de contrôle des phases de régénération des dispositifs de post-traitement permettant une meilleure régulation de la thermique interne de ces dispositifs.

L'invention atteint cet objet par un concept de régénération alternant des périodes de puissance entrante supérieure et inférieure, dites périodes plus riches et plus pauvres, à la puissance moyenne nécessaire pour atteindre la température optimale de régénération, la durée d'une des périodes plus riche ou plus pauvre étant déterminée en fonction de paramètres du dispositif et la durée de l'autre période étant calculée en fonction de la durée d'au moins la période plus riche ou plus pauvre réalisée précédemment.

A cet effet, l'invention repose sur un procédé de contrôle de la température d'un dispositif de post-traitement des gaz d'échappement de véhicule automobile selon la revendication 1, le dispositif de post-traitement comprenant une phase de fonctionnement normal dans lequel il piège et accumule des éléments polluants des gaz d'échappement et une phase de régénération durant laquelle ces éléments polluants accumulés sont brûlés pour régénérer le dispositif de post-traitement, caractérisé en ce que chaque phase de régénération est divisée en une succession de périodes fractionnées ($t_1$ $t_2$) ($t_2$ $t_3$)..., dans lesquelles la température des gaz d'échappement entrant dans le dispositif de post-traitement est alternativement plus chaude, dans une période riche, et plus froide, dans une période pauvre, et en ce que la durée des périodes riches ou pauvres est déterminée respectivement en fonction de la durée d'au moins une période pauvre ou riche, de sorte que le surplus d'énergie apporté dans une période riche soit compensé par un défaut d'énergie dans une période pauvre pour que l'énergie moyenne apportée au dispositif de post-traitement permette à la température sortant du dispositif de post-traitement de rester proche et en moyenne égale à une température de consigne ($Ts_{consigne}$) optimale pour la phase de régénération.

La variation de la température des gaz d'échappement entrant dans le dispositif de post-traitement peut être obtenue par une variation du mode de combustion du moteur, comme par la variation de la richesse en carburant du mélange.

La durée de chaque période pauvre et/ou riche peut être directement déterminée en fonction de la durée de la période riche et/ou pauvre la précédant.

Le procédé de contrôle comprend une étape de détermination de la durée d'une période riche ou pauvre.

La durée de la période riche peut être déterminée en fonction de facteurs extérieurs au procédé de contrôle, et peut dépendre de la quantité de soufre piégé, de la capacité du dispositif de post-traitement à stocker l'oxygène, de son vieillissement thermique, des conditions de roulage et/ou des paramètres de fonctionnement du moteur.

La durée de chaque période riche peut être déterminée de façon à ce que la température maximale (estimée ou mesurée) à l'intérieur du dispositif de post-traitement ne dépasse pas une limite donnée.

Selon une variante d'exécution, la durée de chaque période riche et/ou pauvre est différente à chaque cycle.

Le procédé de contrôle de la température d'un dispositif de post-traitement comprend une étape de calcul de la puissance de consigne ($We_{consigne}$) à l'entrée du dispositif de post-traitement afin d'obtenir la température de consigne en sortie ($Ts_{consigne}$), par les étapes suivantes :

- détermination de la puissance de consigne de sortie recherchée ($Ws_{consigne}$) en fonction de la température de consigne ($Ts_{consigne}$) par le calcul $Ws_{consigne} = Ts_{consigne} * Q_{ech} * C_p$, où $Q_{ech}$ est le débit des gaz d'échappement et $C_p$ la capacité calorifique des gaz ;
- détermination de la puissance de consigne ($We_{consigne}$) à l'entrée du dispositif de post-traitement par la formule

$$\boxed{We_{consigne} = Ws_{consigne} + W_{pertes}}$$

Où $W_{pertes}$ représente une estimation des pertes de puissance au sein du dispositif.

3

Le procédé comprend aussi une étape de calcul de la puissance réelle (We) apportée dans le dispositif de post-traitement par les étapes suivantes :

- mesure ou estimation en temps réel de la température (Te) et du débit des gaz ($Q_{ech}$) entrant dans le dispositif de post-traitement;
- estimation ou mesure de la puissance exothermique (Wexo) potentielle représentée par ces gaz ;
- calcul de la puissance entrante dans le dispositif de post-traitement par la formule suivante :

$$We = Te.Qech.Cp_{gaz} + Wexo$$

Où $Cp_{gaz}$ représente la capacité calorifique des gaz entrants.

La période riche apporte au dispositif de post-traitement une puissance (We) supérieure à la puissance de consigne ($We_{consigne}$) et le procédé comprend une étape de calcul de l'excès d'énergie ($E_{riche}$) apportée par la période riche par le calcul

$$\left[ \int_{t_0}^{t_0+D} \left( We_{consigne} - We \right) \cdot dt \right]_{riche} = E_{riche}$$

Une période pauvre est initiée après la période riche, qui apporte au dispositif de post-traitement une puissance (We) inférieure à la puissance de consigne ($We_{consigne}$), et la durée de la période pauvre (P) est déterminée en fonction de la période riche (R), selon les étapes suivantes :

- calcul de l'énergie manquante ($E_{pauvre}$) apportée par la période pauvre par rapport à la puissance de consigne ($We_{consigne}$) par la formule :

$$\left[ \int \left( We_{consigne} - We \right) \cdot dt \right]_{pauvre} = E_{pauvre}$$

- comparaison de l'énergie manquante ($E_{pauvre}$) de la période pauvre par rapport à l'excès d'énergie apportée par la période riche ($E_{riche}$) et détermination de la fin de la période pauvre lorsque ces deux énergies se compensent, c'est-à-dire lorsque la condition suivante est vérifiée :

$$\left| E_{pauvre} \right| = \left| E_{riche} \right|$$

L'invention porte aussi sur un dispositif de motorisation anti-pollution pour véhicule automobile, comprenant une chambre de combustion alimenté en carburant par un injecteur, un circuit d'échappement pour recevoir les gaz d'échappement, sur lequel est disposé au moins un dispositif de post-traitement comprenant une phase de fonctionnement normal dans lequel il piège et accumule des éléments polluants des gaz d'échappement générés par la combustion de carburant de la chambre de combustion et une phase de régénération durant laquelle ces éléments polluants accumulés sont, suivant le cas, brûlés, oxydés, réduits, ou désorbés pour régénérer le dispositif de post-traitement, caractérisé en ce qu'il comprend une unité de contrôle pour mettre en oeuvre le procédé de contrôle de la température du dispositif de post-traitement lors de chaque phase de régénération tel que décrit précédemment, pour déterminer une succession de périodes fractionnées ($t_1$ $t_2$) ($t_2$ $t_3$)..., dans lesquelles la température des gaz d'échappement entrant dans le dispositif de post-traitement est alternativement plus chaude, dans une période riche, et plus froide, dans une période pauvre, et en ce que la durée des périodes pauvre ou riche est déterminée en fonction de la durée respectivement d'au moins une période riche ou pauvre de sorte que le surplus d'énergie apporté dans une période riche soit compensé par un défaut d'énergie dans une période pauvre pour que l'énergie moyenne apportée au dispositif de post-traitement permette à la température sortant du dispositif de post-traitement de rester proche et en moyenne égale à une température de consigne prédéfinie ($Ts_{consigne}$) optimale pour la phase de régénération.

Le dispositif de motorisation anti-pollution pour véhicule automobile peut comprendre un injecteur additionnel à l'échappement pour modifier la puissance thermique des gaz d'échappement lors des phases de régénération.

Le dispositif peut comprendre deux dispositifs de post-traitement sur le circuit d'échappement et être apte à la régénération simultanée des deux dispositifs de post-traitement. Selon un mode d'exécution, le premier dispositif de post-traitement est un dispositif de piège d'oxyde d'azote (Nox-trap) et le second dispositif de post-traitement est un filtre à particules.

Enfin, l'invention porte aussi sur un véhicule automobile caractérisé en ce qu'il comprend un dispositif tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

la figure 1 représente schématiquement un dispositif de motorisation non polluant selon un mode d'exécution de l'invention ;

la figure 2 représente schématiquement les dispositifs de post-traitement anti-pollution de la ligne d'échappement du dispositif selon le mode d'exécution de l'invention;

la figure 3 représente schématiquement les courbes de variation en fonction du temps des paramètres de fonctionnement du dispositif anti-pollution selon le mode d'exécution de l'invention.

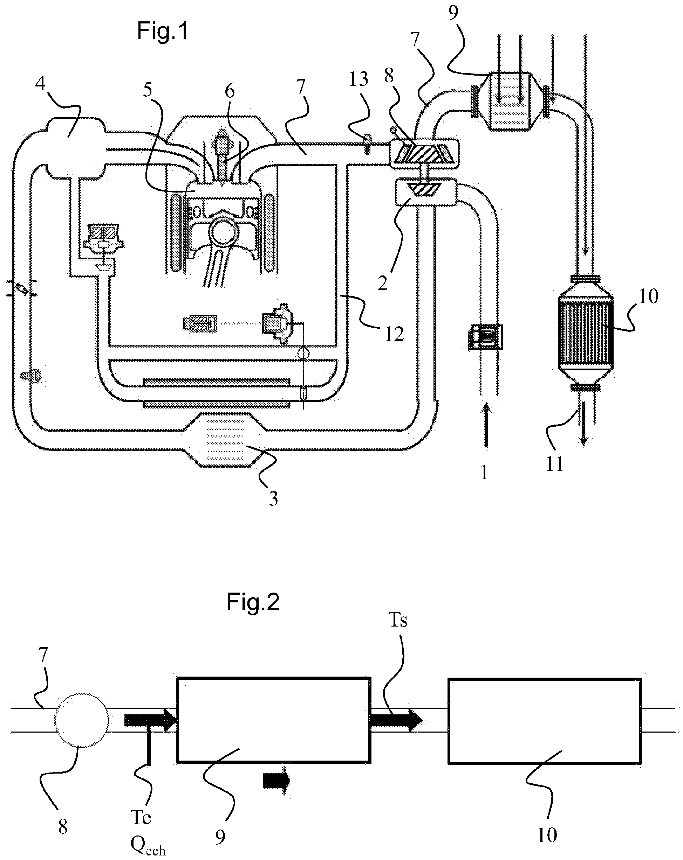

Les figures 1 et 2 représentent schématiquement un dispositif de motorisation à moteur diesel pour véhicule automobile incluant un dispositif anti-pollution. Il comprend de manière classique une entrée d'air 1, un compresseur 2, entraîné par un dispositif turbo 8 placé sur le circuit d'échappement 7, un échangeur de suralimentation 3, un collecteur 4 vers l'admission moteur avant d'atteindre la chambre de combustion 5 du moteur alimenté en carburant par un injecteur 6. Ensuite, il comprend un circuit d'échappement 7 pour recevoir les gaz d'échappement, sur lequel est disposé un premier dispositif de post-traitement 9, qui est un $NO_x$-Trap pour permettre de retenir et de stocker les oxydes d'azote contenus dans les gaz d'échappement. Un second dispositif de post-traitement 10, qui est un filtre à particules 22 qui retient sous forme de suies les particules contenues dans les gaz d'échappement, est disposé en aval sur la ligne d'échappement 7. Les gaz d'échappement ainsi dépollués par ces dispositifs de post-traitement 9, 10 sont ensuite rejetés à l'atmosphère par un circuit d'évacuation 11. Enfin, le dispositif de motorisation comprend un circuit de recirculation 12 EGR des gaz d'échappement entre l'échappement 7 et le collecteur 4.

De façon classique, les polluants accumulés dans le dispositif de post-traitement 9 lors de son fonctionnement normal sont ensuite éliminés dans des phases de régénération, généralement obtenue en élevant la température des gaz sur la base d'un réglage du moteur. Pour cela, l'injecteur 6 ou un injecteur additionnel placé à l'échappement est piloté par une unité de contrôle non représentée qui commande périodiquement le passage en phase de régénération et contrôle alors le bon fonctionnement de ces phases de régénération, par le maintien de la température au sein du dispositif de post-traitement au niveau de consigne souhaité.

La température $T_e$ et le débit $Q_{ech}$ des gaz d'échappement à l'entrée du dispositif de post-traitement 9 sont mesurés, par exemple par des capteurs 13 placés en amont ou en aval de la turbine 8, ou estimés, et varient à chaque instant en fonction du régime et du couple du moteur commandés par le conducteur mais aussi en fonction du mode de combustion utilisé.

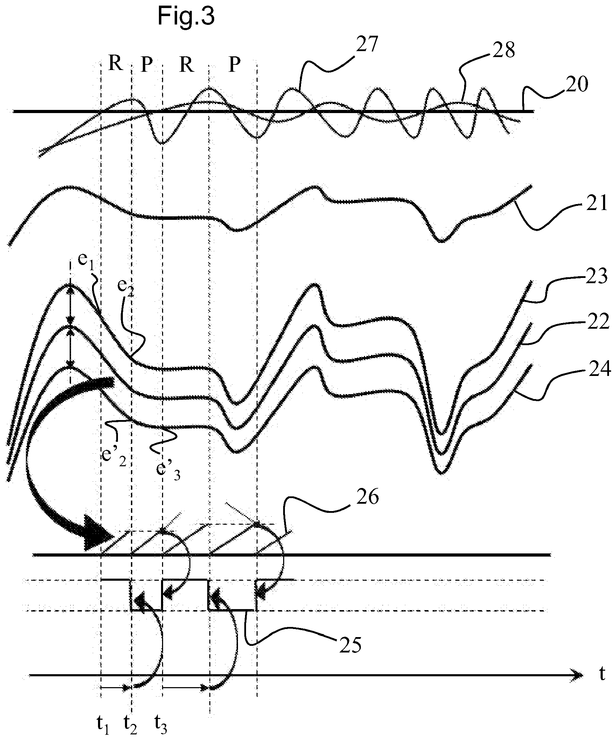

Par exemple, la courbe 20 de la figure 3 représente la température de consigne $Ts_{consigne}$ recherchée à la sortie du dispositif de post-traitement 9, et la courbe 21 l'évolution possible du débit des gaz d'échappement $Q_{ech}$ qui varie en fonction du régime et du couple demandés au moteur, c'est-à-dire de la position de la pédale d'accélération et des rapports engagés sur la boîte de vitesses pendant la période considérée, au cours du temps et du mode de combustion utilisé.

On connaît également à chaque instant, par mesure, estimation ou modélisation, la composition des gaz d'échappement et l'on peut donc en déduire leur capacité calorifique $C_p$ à l'instant considéré.

Après avoir traversé le dispositif de post-traitement 9, les gaz d'échappement ont le même débit $Q_{ech}$ et pour température $T_s$. L'objectif recherché consiste à maintenir cette température $T_s$, pendant toute la durée d'une phase de régénération, au voisinage de la température de consigne $Ts_{consigne}$ pour laquelle le fonctionnement du procédé de régénération est optimal. Cette température est obtenue en moyenne, sous contrainte que la température à l'intérieur du système de post-traitement ne dépasse une valeur seuil, plus élevée que $Ts_{consigne}$ pour éviter une détérioration du dispositif de post-traitement.

D'une façon générale, la puissance thermique, exprimée en joule par seconde, des gaz sortant du dispositif de post-traitement à une température $T_s$ et avec un débit $Q_{ech}$ est égale à :

$$W_s = T_s * Q_{ech} * C_p$$

$C_p$ étant la capacité calorifique des gaz qui dépend de leur composition, c'est-à-dire du mode de combustion, plus ou moins riche, imposé au moteur à cet instant.

Le contrôle de la thermique de la phase de régénération consiste à apporter dans le Nox-trap 9 une puissance thermique entrante moyenne sensiblement égale à cette puissance thermique sortante, c'est-à-dire à la puissance évacuée à la température de consigne désirée.

Cette puissance thermique entrante est constituée, d'une part, de la puissance thermique apportée directement par la chaleur des gaz en raison de leur température $T_e$ et de leur débit $Q_{ech}$ et, d'autre part, de la puissance potentielle apportée indirectement par la capacité de réaction exothermique des masses d'oxygène ou de réducteurs présents dans les gaz d'échappement et qui réagissent partiellement ou totalement dans le dispositif de post-traitement. Cette réaction exothermique fournit, en effet, un complément d'énergie $W_{exo}$ qui, dans le dispositif de post-traitement, s'ajoute à la puissance de chauffage direct des gaz pour élever leur température.
La puissance entrante $W_e$, exprimée en J/s, peut donc s'écrire :

$$W_e = T_e * Q_{ech} * C_p + W_{exo}$$

Cette puissance thermique entrante peut donc être calculée à partir d'une mesure, d'une estimation ou de la modélisation de la température $T_e$ et du débit $Q_{ech}$ des gaz dans la conduite 7, à l'entrée du dispositif de post-traitement 9, ainsi que de leur composition, en particulier des émissions d'oxygène ou de réducteurs, qui permettent de déterminer leur capacité calorifique $C_p$ et la puissance potentielle de réaction exothermique $W_{exo}$.

Cependant, ces paramètres sont liés d'une part au régime et au couple (ou motif d'injection) de fonctionnement du moteur qui varie à chaque instant selon les ordres du conducteur et d'autre part au mode de combustion, c'est-à-dire au degré de richesse en carburant du mélange. Ainsi, un moteur Diesel fonctionne, normalement, en mélange pauvre, mais, comme cela a été explicité ci-dessus, il passe périodiquement en mode plus riche (supérieur ou inférieur à la stoechiométrie) et plus chaud, dans les phases de régénération qui nécessitent une composition des gaz riche et une température plus élevée des gaz.

La puissance thermique entrant dans le catalyseur dépend donc du point de fonctionnement du moteur (régime et couple) et du mode de combustion qui détermine (instantanément ou non) la température $T_e$ et le débit des gaz en entrée du système de post-traitement 1.

Sur le diagramme de la figure 3, la courbe 21 donne un exemple d'évolution possible, sur une période de temps, du débit des gaz d'échappement $Q_{ech}$, (ce débit variant d'une certaine façon selon le régime demandé au moteur, pendant un temps de régénération dont la durée peut aller par exemple de quelques dizaines de secondes à plusieurs minutes).

La puissance thermique qui doit être apportée par les gaz à cette température pour l'obtention d'une température de sortie sensiblement constante, évolue de la même façon que le débit des gaz en fonction du régime du moteur, mais elle dépend aussi de la richesse du mélange selon le mode de combustion choisi, ainsi que des pertes. La courbe 22 indique l'évolution de la puissance de consigne $We_{consigne}$ théoriquement nécessaire, compte tenu des pertes, pour l'obtention de la température de consigne à la sortie du catalyseur.

Il est cependant, difficile de régler le fonctionnement du moteur pendant le temps de régénération afin d'apporter, à chaque instant, la puissance nécessaire à l'obtention et au maintien de la température de consigne. D'autre part, le principe de régénération d'au moins un des systèmes de post-traitement peut imposer d'alterner des modes pauvres et riches et/ou froid et chaud afin de maximiser la vitesse de régénération ou de contrôler la température maximale du système ou le type d'émission gazeuse se retrouvant à l'échappement.

Pour résoudre ce problème, le dispositif met en oeuvre un procédé qui contrôle une alternance de périodes riches R et pauvres P en les associant, de façon à apporter, soit un excès d'énergie grâce à un mode de combustion R plus riche et, par conséquent, plus chaud que nécessaire, soit un défaut d'énergie par un mode de combustion plus pauvre P et, par conséquent, moins chaud que nécessaire, cet excès et ce défaut d'énergie pouvant se compenser de façon à maintenir la température à une valeur moyenne correspondant à la température de consigne. Pour cela, l'injection de carburant est modifiée alternativement pour passer d'un mode de combustion plus riche que nécessaire à un mode de combustion moins riche.

Sur le diagramme de la figure 3, les courbes 23 et 24 représentent l'évolution au cours du temps de la puissance thermique apportée par les gaz à l'entrée du catalyseur respectivement en mode riche et en mode pauvre. Etant donné que la puissance thermique et potentiellement exothermique entrante des gaz est liée au mode de combustion plus ou moins chaud et que le débit dépend de ce mode de combustion mais aussi de la volonté conducteur (régime et couple demandés au moteur), les deux courbes 23, 24 sont sensiblement parallèles et décalées de part et d'autre de la courbe 22 correspondant à la puissance théoriquement nécessaire pour obtenir et maintenir la température de consigne.

A chaque instant, par conséquent, le changement de mode permet d'obtenir soit, en mode riche ou chaud R, un surplus d'énergie par rapport à la puissance théoriquement nécessaire, soit, en mode pauvre ou froid P, un défaut d'énergie. Selon l'invention, en contrôlant les durées respectives des périodes de fonctionnement dans chacun des deux modes, le surplus d'énergie apporté au cours d'une période en mode chaud compense le défaut d'énergie apporté au cours de la période suivante en mode froid, de façon à maintenir une température moyenne optimale. Selon l'invention, le temps de régénération est donc divisé en une succession de périodes fractionnées de fonctionnement, alternativement en mode chaud R et en mode froid P, de la façon représentée par la ligne en créneaux 25 sur la figure 3. Ainsi, le palier haut, entre les temps $t_1$ et $t_2$, correspond à une période en mode chaud R pendant laquelle la puissance entrante suit la courbe 23 entre les points $e_1$ et $e_2$ et le palier bas, entre les instants $t_2$ et $t_3$, correspond à une période en mode froid pendant laquelle la puissance entrante We suit la courbe 24 entre les points $e'_2$ et $e'_3$.

L'énergie absorbée par le catalyseur au cours d'une période correspond à l'intégration, en fonction du temps, de la puissance apportée par les gaz. Il est donc possible de connaître l'excès ou le défaut d'énergie absorbée par le catalyseur au cours d'une certaine période. La courbe 26 représente la variation en valeur absolue, au cours de chaque période fractionnée R, P, de cet excès ou défaut d'énergie par rapport à l'énergie théoriquement nécessaire pour le maintien du catalyseur à la température constante de consigne.

Le dispositif motorisé comprend une unité de contrôle qui met en oeuvre la gestion des phases de régénération en pilotant la durée des périodes fractionnées de sorte que le surplus d'énergie apportée dans une période en mode « chaud » soit compensé par la perte d'énergie lors de la période suivante en mode « froid ». Pour cela, les moyens de réglage du mode de combustion du moteur c'est-à-dire, essentiellement, l'injection en carburant, peuvent avantageusement être pilotés par l'unité de contrôle qui comprend des moyens de type logiciel et/ou matériel électronique (software et/ou hardware) afin de mettre en oeuvre le procédé de pilotage des phases de régénération du dispositif de post-traitement dont les étapes vont être détaillées ci-après, sur la base de l'exploitation des principes expliqués précédemment.

Selon une première étape E1, le procédé met en oeuvre le calcul de la puissance entrant dans le dispositif de post-traitement 9. Cette étape comprend une première sous-étape E11 de mesure ou estimation en temps réel de la température Te et du débit des gaz $Q_{ech}$ entrant dans le dispositif 9 et une seconde sous-étape E12 d'estimation ou mesure de la puissance exothermique potentielle représentée par ces gaz, par exemple grâce à une cartographie des puissances exothermiques instantanées selon les points de fonctionnement moteur.

Ainsi, la puissance entrante peut être calculée dans une troisième sous-étape E13 par la formule suivante :

$$\boxed{We = Te.Qech.Cp_{gaz} + Wexo}$$

Où $Cp_{gaz}$ représente la capacité calorifique des gaz entrants.

Ensuite, le procédé comprend une seconde étape E2 de calcul de la puissance de consigne entrante $We_{consigne}$ qu'il faut atteindre en fonction puissance de consigne de sortie $Ws_{consigne}$ déterminée par la température de consigne en sortie $Ts_{consigne}$ recherchée, et en tenant compte de pertes de puissance $W_{pertes}$ au sein du dispositif, selon la formule :

$$\boxed{We_{consigne} = Ws_{consigne} + W_{pertes}}$$

Dans une troisième étape E3, le procédé détermine une durée D $(t_2-t_1)$ du fonctionnement en mode riche du moteur, mode initié à un instant $t_1$, en fonction des conditions d'utilisation du catalyseur et/ou de paramètres du moteur (point de fonctionnement du moteur, modèle de la quantité d'oxygène stocké et réduit dans le dispositif de post-traitement, vieillissement de ce dispositif, débit de réducteur pour favoriser l'émission de soufre sous forme SO2 plutôt que H2S), de la température seuil à ne pas dépasser dans le système. La durée des périodes riches peut par exemple être prédéfinie ou déterminée à partir de modèles dynamiques (par exemple estimation des températures internes, modèle de régénération de la quantité d'oxygène stocké ou estimation de la quantité de H2S émise) ou d'informations mesurées (dépassement de la température seuil mesurée, basculement ou variation de l'information délivrée par une sonde à oxygène en aval).

Dans une quatrième étape E4, le procédé évalue l'excès d'énergie $E_{riche}$ apportée par le mode riche par l'intégration de la différence entre la puissance instantanée fournie We par ce mode riche et la puissance de consigne $We_{consigne}$ sur la durée D du mode chaud :

$$\boxed{[\int_{t_0}^{t_0+D}\left(We_{consigne} - We\right)\cdot dt]_{riche} = E_{riche}}$$

Dans une cinquième étape E5, le procédé modifie le mode de fonctionnement en mode pauvre du dispositif à la fin de la durée D définie précédemment, à l'instant $t_2$, et mémorise l'énergie $E_{riche}$ calculée à l'étape précédente et représentant l'énergie apportée en excès par le mode riche.

Dans une sixième étape E6, le procédé détermine la fin $t_3$ de la période de fonctionnement en mode froid. Pour cela, il comprend une première sous-étape E61 consistant en un calcul de l'énergie manquante $E_{pauvre}$ apportée par le mode froid par rapport à l'énergie souhaitée par la puissance de consigne $We_{consigne}$, par intégration selon la formule suivante :

$$\left[\int \left(We_{consigne} - We\right)\cdot dt\right]_{pauvre} = E_{pauvre}$$

Dans une seconde sous-étape E62, le procédé met en oeuvre une comparaison de l'énergie manquante $E_{pauvre}$ du mode pauvre par rapport à l'excès d'énergie apportée par le mode riche $E_{riche}$ et détermine la fin de la période du mode pauvre et le retour au mode riche lorsque ces deux énergies se compensent, c'est-à-dire lorsque la condition suivante est vérifiée :

$$\left| E_{pauvre} \right| = \left| E_{riche} \right|$$

Ce procédé de contrôle de la température détermine donc la durée des créneaux pauvres en fonction de la durée des créneaux riches. Cette dernière peut être prédéfinie par certains critères de condition d'utilisation (point de fonctionnement, débit, richesse amont, vieillissement du catalyseur) ou imposée par un arrêt du créneau riche. Dans de ce dernier cas, l'arrêt peut intervenir via l'apparition d'une requête de fin de créneau riche, correspondant par exemple à la fin de consommation de l'oxygène stocké (déterminée par un modèle ou par une sonde à oxygène disposée en aval), au dépassement d'une température seuil interne (mesurée ou estimée) ou via l'apparition d'autres conditions impliquant l'arrêt du créneau riche.

Ces étapes du procédé sont répétées durant toute la phase de régénération du dispositif de post-traitement 9 pour obtenir une multitude de cycles alternés de périodes riches et pauvres. En remarque, la durée et donc l'énergie associée à chaque mode "riche" et "pauvre" est différente à chaque cycle et s'adapte aux conditions de fonctionnement du moteur. Cela permet notamment de s'adapter à une température variable des gaz à l'entrée du catalyseur telle que représentée par la courbe 27.La température réelle à la sortie oscille plus ou moins autour de la température de consigne $Ts_{consigne}$ recherchée, représentée par la courbe 28, suivant la sollicitation du fractionnement (durées des créneaux riches et pauvres) et de l'inertie thermique du système (débit des gaz et masse ou volume du monolithe). Ainsi, la solution permet bien d'atteindre une température en sortie du dispositif de post-traitement 9 maintenue au voisinage d'une valeur moyenne qui correspond à la température de consigne $Ts_{consigne}$.

L'invention permet ainsi, en pilotant le choix du mode de combustion dans le moteur, de maintenir la température à l'intérieur du catalyseur à un niveau optimal aussi élevé que possible mais restant inférieur à une température maximale déterminée à l'avance. Il est ainsi possible de réaliser, dans des conditions optimales, la régénération du premier système de post-traitement 9.

Le procédé mis en oeuvre permet une stratégie de contrôle de la température adaptée à des facteurs extérieurs à cette stratégie, comme la quantité de soufre piégé, la capacité du piège à stocker l'oxygène, son vieillissement thermique, les conditions de roulage et de réalisation du mode riche, ... Ainsi, on peut optimiser la durée d'une désulfuration et favoriser la conversion du soufre stocké dans un piège à NOx en un composé soufré précis (de préférence $SO_2$), ou encore optimiser le traitement du H2S par un catalyseur en aval stockant et convertissant le H2S en SO2. En variante, il est possible inversement de définir la durée des périodes pauvres, en fonction de paramètres indépendants du procédé comme le rechargement de l'OSC du NOxTRAP ou la régénération d'un catalyseur stockant et traitant le $H_2S$ trap placé en aval, et d'adapter la durée des périodes riches en fonction de la durée des périodes pauvres.

D'autre part, comme la température des gaz à la sortie du premier dispositif anti-pollution 9 est maintenue sensiblement constante, il est possible également d'effectuer en même temps la régénération d'un second système de post-traitement 10 placé en aval. En effet, l'alternance des périodes fractionnées permet d'effectuer dans les meilleures conditions la régénération simultanée des systèmes de post-traitement de filtre à particules 10 et de la désulfatation du NOxtrap 9, qui se font respectivement en mode pauvre pour la combustion des suies dans les filtres à particules et en mode riche dans la désulfuration.

Ainsi, pour la régénération des systèmes classiques, le procédé gérera les passages alternativement d'un mode riche à un mode pauvre. Dans certaines applications, il peut être possible de gérer le fractionnement à partir de deux modes pauvres distincts, par exemple pour la régénération des suies dans un dispositif de post-traitement du type filtre à particules ou un système 4-voies placé en aval d'un premier système de type DOC, NOx-Trap ou 4-Voies. De même, il est possible, à partir de deux modes pauvres distincts d'optimiser l'efficacité de traitement des oxydes d'azote sur un système SCR (Selectiv Catalytic Réduction) placé en aval d'un DOC.

Selon une variante de l'invention, le procédé de contrôle thermique peut comprendre une pré-étape permettant d'approcher initialement la température du monolithe du dispositif de post-traitement proche de la température de consigne recherchée, pour éviter un temps de convergence important du fait de l'inertie de ce monolithe. Pour cela, il est possible d'utiliser la connaissance de l'énergie interne du monolithe en utilisant un modèle thermique de ce monolithe.

De plus, pour s'affranchir d'éventuelles erreurs dues au disfonctionnement par exemple d'un capteur de température à l'entrée du dispositif, le procédé peut mettre en oeuvre une stratégie de recalage des sources d'erreurs à partir de la mesure de la température en aval du premier système de post-traitement.

Cette invention est destinée à contrôler la gestion des phases de régénération de tout dispositif de post-traitement de véhicule automobile et peut être implantée sur tous les véhicules à moteur essence ou diesel. De plus, elle est compatible avec tous les autres dispositifs anti-pollution comme l'EGR.

## Revendications

1. Procédé de contrôle de la température d'un dispositif de post-traitement (9, 10) des gaz d'échappement de véhicule automobile, le dispositif de post-traitement (9, 10) comprenant une phase de fonctionnement normal dans lequel il piège et accumule des éléments polluants des gaz d'échappement et une phase de régénération durant laquelle ces éléments polluants accumulés sont brûlés pour régénérer le dispositif de post-traitement (9, 10), dans lequel chaque phase de régénération est divisée en une succession de périodes fractionnées $(t_1\,t_2)\,(t_2\,t_3)$..., dans lesquelles la température des gaz d'échappement entrant dans le dispositif de post-traitement est alternativement plus chaude, dans une période riche (R), et plus froide, dans une période pauvre (P), le procédé comprenant une étape (E3) de détermination de la durée (D) d'une période riche (R) ou pauvre (P), dans laquelle la durée de chaque période pauvre (P) et/ou riche (R) est directement déterminée en fonction de la durée de la période riche (R) et/ou pauvre (P) la précédant, de sorte que le surplus d'énergie apporté dans une période riche (R) soit compensé par un défaut d'énergie dans une période pauvre (P) pour que l'énergie moyenne apportée au dispositif de post-traitement (9, 10) permette à la température sortant du dispositif de post-traitement (9, 10) de rester proche et en moyenne égale à une température de consigne ($Ts_{consigne}$) optimale pour la phase de régénération, **caractérisé en ce qu'**il comprend une étape (E2) de calcul de la puissance de consigne ($We_{consigne}$) à l'entrée du dispositif de post-traitement (9, 10) afin d'obtenir la température de consigne en sortie ($Ts_{consigne}$), par les étapes suivantes :

   - détermination de la puissance de consigne de sortie recherchée ($Ws_{consigne}$) en fonction de la température de consigne ($Ts_{consigne}$) par le calcul $Ws_{consigne} = Ts_{consigne}\,{}^*\,Q_{ech}\,{}^*\,C_p$,
   où $Q_{ech}$ est le débit des gaz d'échappement et $C_p$ la capacité calorifique des gaz ;
   - détermination de la puissance de consigne ($We_{consigne}$) à l'entrée du dispositif de post-traitement (9, 10) par la formule

$$\boxed{We_{consigne} = Ws_{consigne} + W_{pertes}}$$

   Où $W_{pertes}$ représente une estimation des pertes de puissance au sein du dispositif,

   et **caractérisé en ce qu'**il comprend une étape (E1) de calcul de la puissance réelle (We) apportée dans le dispositif de post-traitement (9, 10) par les étapes suivantes :

   - (E11) : mesure ou estimation en temps réel de la température (Te) et du débit des gaz ($Q_{ech}$) entrant dans le dispositif de post-traitement (9, 10) ;
   - (E12): estimation ou mesure de la puissance exothermique (Wexo) potentielle représentée par ces gaz ;
   - (E13) : calcul de la puissance entrante dans le dispositif de post-traitement (9, 10) par la formule suivante :

$$\boxed{We = Te.Qech.Cp_{gaz} + Wexo}$$

   Où $Cp_{gaz}$ représente la capacité calorifique des gaz entrants,

et **caractérisé en ce que** la période riche (R) apporte au dispositif de post-traitement (9, 10) une puissance (We) supérieure à la puissance de consigne ($We_{consigne}$) et **en ce qu'**il comprend une étape (E4) de calcul de l'excès d'énergie ($E_{riche}$) apportée par la période riche (R) par le calcul

$$\left[\int_{t_0}^{t_0+D}\left(We_{consigne} - We\right)\cdot dt\right]_{riche} = E_{riche}$$

et **caractérisé en ce qu'**une période pauvre (P) est initiée après la période riche (R), qui apporte au dispositif de post-traitement (9, 10) une puissance (We) inférieure à la puissance de consigne ($We_{consigne}$), et **en ce qu'**il détermine dans une étape (E6) la durée de la période pauvre (P) en fonction de la période riche (R), selon les étapes suivantes :

- (E61) : calcul de l'énergie manquante ($E_{pauvre}$) apportée par la période pauvre par rapport à la puissance de consigne ($We_{consigne}$) par la formule :

$$\left[\int\left(We_{consigne} - We\right)\cdot dt\right]_{pauvre} = E_{pauvre}$$

- (E62) : comparaison de l'énergie manquante ($E_{pauvre}$) de la période pauvre par rapport à l'excès d'énergie apportée par la période riche ($E_{riche}$) et détermination de la fin de la période pauvre lorsque ces deux énergies se compensent, c'est-à-dire lorsque la condition suivante est vérifiée :

$$\left|E_{pauvre}\right| = \left|E_{riche}\right|$$

2. Procédé de contrôle de la température d'un dispositif de post-traitement (9, 10) selon la revendication 1, **caractérisé en ce que** la variation de la température des gaz d'échappement entrant dans le dispositif de post-traitement (9, 10) est obtenue par une variation du mode de combustion du moteur, comme par la variation de la richesse en carburant du mélange.

3. Procédé de contrôle de la température d'un dispositif de post-traitement (9, 10) selon la revendication précédente, **caractérisé en ce que** la durée de la période riche (R) est déterminée en fonction de facteurs extérieurs au procédé de contrôle, et peut dépendre de la quantité de soufre piégé, de la capacité du dispositif de post-traitement à stocker l'oxygène, de son vieillissement thermique, des conditions de roulage et/ou des paramètres de fonctionnement du moteur.

4. Procédé de contrôle de la température d'un dispositif de post-traitement (9, 10) selon la revendication 3, **caractérisé par le fait que** la durée (D) de chaque période riche (R) est déterminée de façon à ce que la température maximale (estimée ou mesurée) à l'intérieur du dispositif de post-traitement (9, 10) ne dépasse pas une limite donnée.

5. Procédé de contrôle de la température d'un dispositif de post-traitement (9, 10) selon l'une des revendications 1 à 4, **caractérisé en ce que** la durée de chaque période riche (R) et/ou pauvre (P) est différente à chaque cycle.

6. Dispositif de motorisation anti-pollution pour véhicule automobile, comprenant une chambre de combustion (5) alimenté en carburant par un injecteur (6), un circuit d'échappement (7) pour recevoir les gaz d'échappement, sur lequel est disposé au moins un dispositif de post-traitement (9) comprenant une phase de fonctionnement normal dans lequel il piège et accumule des éléments polluants des gaz d'échappement générés par la combustion de carburant de la chambre de combustion (5) et une phase de régénération durant laquelle ces éléments polluants accumulés sont, suivant le cas, brûlés, oxydés, réduits, ou désorbés pour régénérer le dispositif de post-traitement (9, 10), **caractérisé en ce qu'**il comprend une unité de contrôle qui met en oeuvre le procédé de contrôle de la température du dispositif de post-traitement (9) lors de chaque phase de régénération selon l'une des revendications précédentes, pour déterminer une succession de périodes fractionnées ($t_1\,t_2$) ($t_2\,t_3$)..., dans lesquelles la température des gaz d'échappement entrant dans le dispositif de post-traitement est alternativement plus chaude, dans une période riche (R), et plus froide, dans une période pauvre (P), et **en ce que** la durée de chaque période pauvre (P) et/ou riche (R) est directement déterminée en fonction de la durée de la période riche (R) et/ou pauvre (P) la précédant de sorte que le surplus d'énergie apporté dans une période riche (R) soit compensé par un défaut d'énergie dans une période pauvre (P) pour que l'énergie moyenne apportée au dispositif de post-traitement (9, 10) permette à la température sortant du dispositif de post-traitement (9, 10) de rester proche et en moyenne égale à une température de consigne prédéfinie (Ts$_{consigne}$) optimale pour la phase de régénération.

**7.** Dispositif de motorisation anti-pollution pour véhicule automobile selon la revendication précédente, **caractérisé en ce qu'**il comprend un injecteur additionnel à l'échappement pour modifier la puissance thermique des gaz d'échappement lors des phases de régénération.

**8.** Dispositif de motorisation anti-pollution pour véhicule automobile selon la revendication 6 ou 7, **caractérisé en ce qu'**il comprend deux dispositifs de post-traitement (9, 10) sur le circuit d'échappement (7) et **en ce qu'**il est apte à la régénération simultanée des deux dispositifs (9, 10) de post-traitement.

**9.** Dispositif de motorisation anti-pollution pour véhicule automobile selon la revendication précédente, **caractérisé en ce que** le premier dispositif de post-traitement (9) est un dispositif de piège d'oxyde d'azote (Nox-trap) et **en ce que** le second dispositif de post-traitement (10) est un filtre à particules.

**10.** Véhicule automobile **caractérisé en ce qu'**il comprend un dispositif selon l'une des revendications 6 à 9.

**Patentansprüche**

**1.** Verfahren zur Steuerung der Temperatur einer Abgasnachbehandlungsvorrichtung (9, 10) eines Kraftfahrzeugs, wobei die Nachbehandlungsvorrichtung (9, 10) eine Normalbetriebsphase, in der sie die Schadstoffelemente der Abgase einfängt und sammelt, und eine Regenerationsphase, während der diese gesammelten Schadstoffelemente verbrannt werden, um die Nachbehandlungsvorrichtung (9, 10) zu regenerieren, umfasst, wobei jede Regenerationsphase in eine Abfolge von gesplitteten Perioden ($t_1$ $t_2$) ($t_2$ $t_3$) ... unterteilt ist, in denen die Temperatur der in die Nachbehandlungsvorrichtung eintretenden Abgase abwechselnd in einer fetten Periode (R) heißer und in einer mageren Periode (P) kälter ist, wobei das Verfahren einen Schritt (E3) des Bestimmens der Dauer (D) einer fetten (R) oder mageren (P) Periode umfasst, wobei die Dauer jeder mageren (P) und/oder fetten (R) Periode direkt in Abhängigkeit von der Dauer der vorausgegangenen fetten (R) und/oder mageren (P) Periode bestimmt wird, so dass der in einer fetten Periode (R) zugeführte Energieüberschuss durch einen Energiemangel in einer mageren Periode (P) ausgeglichen wird, damit die der Nachbehandlungsvorrichtung (9, 10) zugeführte durchschnittliche Energie es der aus der Nachbehandlungsvorrichtung (9, 10) austretenden Temperatur ermöglicht, nahe und im Durchschnitt gleich einer für die Regenerationsphase optimalen Solltemperatur (Ts$_{soll}$) zu bleiben, **dadurch gekennzeichnet, dass** es einen Schritt (E2) des Berechnens der Sollleistung (We$_{soll}$) am Einlass der Nachbehandlungsvorrichtung (9, 10), um die Solltemperatur im Auslass (Ts$_{soll}$) zu erhalten, durch die folgenden Schritte umfasst:

- Bestimmen der angestrebten Sollaustrittsleistung (Ws$_{soll}$) in Abhängigkeit von der Solltemperatur (Ts$_{soll}$) durch die Berechnung Ws$_{soll}$ = Ts$_{soll}$ * Q$_{Abgas}$ * C$_p$,
wobei Q$_{Abgas}$ der Volumenstrom der Abgase und C$_p$ die Wärmekapazität der Gase ist;
- Bestimmen der Sollleistung (We$_{soll}$) am Einlass der Nachbehandlungsvorrichtung (9, 10) durch die Formel

$$We_{Soll} = Ws_{Soll} + W_{Verluste}$$

wobei W$_{verluste}$ für eine Schätzung der Leistungsverluste in der Vorrichtung steht,

und **dadurch gekennzeichnet**, es einen Schritt (E1) des Berechnens der tatsächlichen Leistung (We), die der Nachbehandlungsvorrichtung (9, 10) zugeführt wird, durch die folgenden Schritte umfasst:

- (E11): Messen oder Schätzen in Echtzeit der Temperatur (Te) oder des Volumenstroms der Gase (Q$_{Abgas}$), die in die Nachbehandlungsvorrichtung (9, 10) eintreten;
- (E12): Schätzen oder Messen der potentiellen exothermen Leistung (Wexo), die durch diese Gase repräsentiert wird;
- (E13): Berechnen der in die Nachbehandlungsvorrichtung (9, 10) eingehenden Leistung durch die folgende Formel:

$$\boxed{\texttt{We = Te.QAbgas.Cp}_{\texttt{Gas}} \texttt{ + Wexo}}$$

wobei $Cp_{Gas}$ für die Wärmekapazität der eintretenden Gase steht, und **dadurch gekennzeichnet, dass** die fette Periode (R) der Nachbehandlungsvorrichtung (9, 10) eine Leistung (We) zuführt, die größer als die Sollleistung ($We_{Soll}$) ist, und dass es einen Schritt (E4) des Berechnens des Energieüberschusses ($E_{fett}$), der durch die fette Periode (R) zugeführt wird, umfasst durch die Berechnung

$$\boxed{\left[\int_{t_0}^{t_0+D} (We_{Soll} - We) \cdot dt\right]_{fett} = E_{fett}}$$

und **dadurch gekennzeichnet, dass** nach der fetten Periode (R) eine magere Periode (P) initiiert wird, die der Nachbehandlungsvorrichtung (9, 10) eine Leistung (We) zuführt, die geringer als die Sollleistung ($We_{Soll}$) ist, und dass es in einem Schritt (E6) die Dauer der mageren Periode (P) in Abhängigkeit von der fetten Periode (R) nach den folgenden Schritten bestimmt:

- (E61) : Berechnen der fehlenden Energie ($E_{mager}$), die durch die magere Periode zugeführt wird, in Bezug auf die Sollleistung ($We_{Soll}$) durch die Formel:

$$\boxed{\left[\int We_{Soll} - We \cdot Dt\right]_{mager} = E_{mager}}$$

- (E62): Vergleichen der fehlenden Energie ($E_{mager}$) der mageren Periode in Bezug auf den von der fetten Periode zugeführten Energieüberschuss ($E_{fett}$) und Bestimmen des Endes der mageren Periode, wenn diese beiden Energien sich ausgleichen, d. h. wenn die folgende Bedingung erfüllt ist:

$$\boxed{\left|E_{mager}\right| = \left|E_{fett}\right|}$$

2. Verfahren zur Steuerung der Temperatur einer Nachbehandlungsvorrichtung (9, 10) nach Anspruch 1, **dadurch gekennzeichnet, dass** die Änderung der Temperatur der in die Nachbehandlungsvorrichtung (9, 10) eintretenden Abgase durch eine Änderung des Verbrennungsmodus des Motors wie durch die Änderung des Luft/Kraftstoff-Verhältnisses des Gemisches erhalten wird.

3. Verfahren zur Steuerung der Temperatur einer Nachbehandlungsvorrichtung (9, 10) nach dem vorhergehenden Anspruch, **dadurch gekennzeichnet, dass** die Dauer der fetten Periode (R) in Abhängigkeit von gegenüber dem Steuerungsverfahren externen Faktoren bestimmt wird und von der Menge des eingefangenen Schwefels, von der Sauerstoffspeicherkapazität der Nachbehandlungsvorrichtung, von ihrer thermischen Alterung, von den Fahrbedingungen und/oder von den Betriebsparametern des Motors abhängen kann.

4. Verfahren zur Steuerung der Temperatur einer Nachbehandlungsvorrichtung (9, 10) nach Anspruch 3, **dadurch gekennzeichnet, dass** die Dauer (D) jeder fetten Periode (R) so bestimmt wird, dass die höchste Temperatur (geschätzt oder gemessen) im Inneren der Nachbehandlungsvorrichtung (9, 10) einen gegebenen Grenzwert nicht überschreitet.

5. Verfahren zur Steuerung der Temperatur einer Nachbehandlungsvorrichtung (9, 10) nach einem der Ansprüche 1 bis 4, **dadurch gekennzeichnet, dass** die Dauer der fetten (R) und/oder mageren (P) Periode bei jedem Zyklus verschieden ist.

6. Schadstoffreduzierende Antriebsvorrichtung für ein Kraftfahrzeug, umfassend einen Verbrennungsraum (5), der von einer Einspritzdüse (6) mit Kraftstoff versorgt wird, eine Abgasanlage (7) zum Aufnehmen der Abgase, in der mindestens eine Nachbehandlungsvorrichtung (9) angeordnet ist, die eine Normalbetriebsphase, in der sie die Schadstoffelemente der Abgase, die durch die Verbrennung des Kraftstoffs des Verbrennungsraums (5) erzeugt werden, einfängt und sammelt, und eine Regenerationsphase, in der diese gesammelten Schadstoffelemente je nach Fall verbrannt, oxidiert, reduziert oder desorbiert werden, um die Nachbehandlungsvorrichtung (9, 10) zu regenerieren, umfasst, **dadurch gekennzeichnet, dass** sie eine Steuerungseinheit umfasst, die das Verfahren zur Steuerung der Temperatur der Nachbehandlungsvorrichtung (9) nach einem der vorhergehenden Ansprüche bei jeder Regenerationsphase einsetzt, um eine Abfolge von gesplitteten Perioden ($t_1$ $t_2$) ($t_2$ $t_3$) ... zu bestimmen, in denen die Temperatur der in die Nachbehandlungsvorrichtung eintretenden Abgase abwechselnd in einer fetten Periode (R) heißer und in einer mageren Periode (P) kälter ist, und dadurch, dass die Dauer jeder mageren (P) und/oder fetten (R) Periode direkt in Abhängigkeit von der Dauer der vorausgegangenen fetten (R) und/oder mageren (P) Periode bestimmt wird, so dass der in einer fetten Periode (R) zugeführte Energieüberschuss durch einen Energiemangel in einer mageren Periode (P) ausgeglichen wird, damit die der Nachbehandlungsvorrichtung (9, 10) zugeführte durchschnittliche Energie es der aus der Nachbehandlungsvorrichtung (9, 10) austretenden Temperatur ermöglicht, nahe und im Durchschnitt gleich einer vorgegebenen, für die Regenerationsphase optimalen Solltemperatur ($Ts_{soll}$) zu bleiben.

7. Schadstoffreduzierende Antriebsvorrichtung für ein Kraftfahrzeug nach dem vorhergehenden Anspruch, **dadurch gekennzeichnet, dass** sie eine zusätzliche Einspritzdüse am Auspuff umfasst, um die thermische Leistung der Abgase während der Regenerationsphasen zu ändern.

8. Schadstoffreduzierende Antriebsvorrichtung für ein Kraftfahrzeug nach Anspruch 6 oder 7, **dadurch gekennzeichnet, dass** sie zwei Nachbehandlungsvorrichtungen (9, 10) an der Abgasanlage (7) umfasst und dass sie zur gleichzeitigen Regeneration der beiden Nachbehandlungsvorrichtungen (9, 10) geeignet ist.

9. Schadstoffreduzierende Antriebsvorrichtung für ein Kraftfahrzeug nach dem vorhergehenden Anspruch, **dadurch gekennzeichnet, dass** die erste Nachbehandlungsvorrichtung (9) eine Stickoxidfalle (NOx trap) ist und dass die zweite Nachbehandlungsvorrichtung (10) ein Partikelfilter ist.

10. Kraftfahrzeug, **dadurch gekennzeichnet, dass** es eine Vorrichtung nach einem der Ansprüche 6 bis 9 umfasst.

## Claims

1. Method for controlling the temperature of a device (9, 10) for the post-treatment of the exhaust gases of a motor vehicle, the post-treatment device (9, 10) comprising a phase of normal operation in which it traps and accumulates pollutant elements from the exhaust gases and a regeneration phase during which these accumulated pollutant elements are burnt to regenerate the post-treatment device (9, 10), in which each regeneration phase is divided into a succession of fractionated periods ($t_1$ $t_2$) ($t_2$ $t_3$)..., in which the temperature of the exhaust gases entering the post-treatment device is alternately hotter, in a rich period (R), and colder, in a lean period (P), the method comprising a step (E3) of determining the duration (D) of a rich (R) or lean (P) period, in which the duration of each lean (P) and/or rich (R) period is determined directly as a function of the duration of the rich (R) and/or lean (P) period preceding it,
so that the surplus energy supplied in a rich period (R) is compensated for by a deficiency of energy in a lean period (P) so that the mean energy supplied to the post-treatment device (9, 10) allows the temperature leaving the post-treatment device (9, 10) to remain close, and on average equal, to a reference temperature ($Ts_{ref}$) that is optimal for the regeneration phase, **characterized in that** it comprises a step (E2) of calculating the reference power ($We_{ref}$) at the input of the post-treatment device (9, 10) so as to obtain the outlet reference temperature ($Ts_{ref}$), using the following steps:

- determining the sought-after outlet reference power ($Ws_{ref}$) as a function of the reference temperature ($Ts_{ref}$) by calculating

$$Ws_{ref} = Ts_{ref} * Q_{exh} * C_p,$$

where $Q_{exh}$ is the flow rate of the exhaust gases and $C_p$ is the heat capacity of the gases;
- determining the reference power ($We_{ref}$) at the inlet of the post-treatment device (9, 10) using the formula

$$We_{ref} = Ws_{ref} + W_{losses}$$

where $W_{losses}$ represents an estimate of the power losses within the device,

**characterized in that** it comprises a step (E1) of calculating the actual power (We) supplied in the post-treatment device (9, 10) using the following steps:

- (E11): measuring or estimating, in real time, the temperature (Te) and the flow rate of the gases ($Q_{exh}$) entering the post-treatment device (9, 10);
- (E12): estimating or measuring the potential exothermal power (Wexo) represented by these gases;
- (E13): calculating the power entering the post-treatment device (9, 10), using the following formula:

$$We = Te.Q_{exh}.Cp_{gas} + Wexo$$

where $Cp_{gas}$ represents the heat capacity of the incoming gases,

and **characterized in that** the rich period (R) supplies the post-treatment device (9, 10) with a power (We) greater than the reference power ($We_{ref}$) and **in that** it comprises a step (E4) of calculating the excess energy ($E_{rich}$) supplied by the rich period (R) using the calculation

$$[\int_{t_0}^{t_0+D} (We_{ref} - We) \cdot dt]_{rich} = E_{rich}$$

and **characterized in that** a lean period (P) is initiated after the rich period (R) and supplies the post-treatment device (9, 10) with a power (We) less than the reference power ($We_{ref}$), and **in that** it determines, in a step (E6), the duration of the lean period (P) as a function of the rich period (R), using the following steps:

- (E61): calculating the missing energy ($E_{lean}$) supplied by the lean period by comparison with the reference power ($We_{ref}$) using the formula:

$$[\int (We_{ref} - We) \cdot dt]_{lean} = E_{lean}$$

- (E62) : comparing the missing energy ($E_{lean}$) from the lean period against the excess energy supplied by the rich period ($E_{rich}$) and determining the end of the lean period when these two energies compensate one another, namely when the following condition is satisfied:

$$|E_{lean}| = |E_{rich}|$$

2. Method for controlling the temperature of a post-treatment device (9, 10) according to Claim 1, **characterized in that** the variation in the temperature of the exhaust gases entering the post-treatment device (9, 10) is obtained by varying the mode of combustion of the engine, such as by varying the richness (fuel content) of the mixture.

3. Method for controlling the temperature of a post-treatment device (9, 10) according to the preceding claim, **characterized in that** the duration of the rich period (R) is determined as a function of factors external to the control method, and may be dependent on the quantity of sulfur trapped, on the capacity of the post-treatment device to store oxygen, on the thermal aging thereof, on the running conditions and/or on the engine operating parameters.

4. Method for controlling the temperature of a post-treatment device (9, 10) according to Claim 3, **characterized in that** the duration (D) of each rich period (R) is determined in such a way that the maximum (estimated or measured) temperature inside the post-treatment device (9, 10) does not exceed a given limit.

5. Method for controlling the temperature of a post-treatment device (9, 10) according to one of Claims 1 to 4, **char-**

**acterized in that** the duration of each rich (R) and/or lean (P) period is different on each cycle.

6. Pollution-controlling propulsion device for a motor vehicle comprising a combustion chamber (5) supplied with fuel by an injector (6), an exhaust circuit (7) to receive the exhaust gases, on which circuit there is mounted at least one post-treatment device (9) comprising a phase of normal operation in which it traps and accumulates pollutant elements from the exhaust gases generated by the combustion of fuel in the combustion chamber (5), and a regeneration phase during which these accumulated pollutant elements are, as the case may be, burnt, oxidized, reduced or desorbed in order to regenerate the post-treatment device (9, 10), **characterized in that** it comprises a control unit which implements the method for controlling the temperature of the post-treatment device (9) according to one of the preceding claims during each regeneration phase, in order to determine a succession of fractionated periods $(t_1 \, t_2) \, (t_2 \, t_3)$..., in which the temperature of the exhaust gases entering the post-treatment device is alternately hotter, in a rich period (R), and colder, in a lean period (P), and **in that** the duration of each lean (P) and/or rich (R) period is directly determined as a function of the duration of the rich (R) and/or lean (P) period preceding it so that the surplus energy supplied in a rich period (R) is compensated for by a deficiency of energy in a lean period (P) so that the mean energy supplied to the post-treatment device (9, 10) allows the outlet temperature of the post-treatment device (9, 10) to remain close, and on average equal, to a predefined reference temperature ($Ts_{ref}$) that is optimal for the regeneration phase.

7. Pollution-controlling propulsion device for a motor vehicle according to the preceding claim, **characterized in that** it comprises an additional injector on the exhaust side to modify the thermal power of the exhaust gases during the regeneration phases.

8. Pollution-controlling propulsion device for a motor vehicle according to Claim 6 or 7, **characterized in that** it comprises two post-treatment devices (9, 10) on the exhaust circuit (7) and **in that** it is capable of simultaneously regenerating both of the two post-treatment devices (9, 10).

9. Pollution-controlling propulsion device for a motor vehicle according to the preceding claim, **characterized in that** the first post-treatment device (9) is a device that traps nitrogen oxides (NOx-trap) and **in that** the second post-treatment device (10) is a particulate filter.

10. Motor vehicle **characterized in that** it comprises a device according to one of Claims 6 to 9.

Fig.1

Fig.2

Fig.3

## RÉFÉRENCES CITÉES DANS LA DESCRIPTION

**Documents brevets cités dans la description**

- EP 1519021 A2
- EP 0580389 A